# EUROPÄISCHE PATENTSCHRIFT

(11) **EP 1 985 508 B1**
(45) Veröffentlichungstag und Bekanntmachung des Hinweises auf die Patenterteilung: **02.01.2013**
(21) Anmeldenummer: 08001151.3
(22) Anmeldetag: 23.01.2008
(51) Int. Cl.: B60R 22/04

(54) **Energieabsorbierendes Deformationselement für ein Fahrzeug**
Energy absorbing deformation element for a motor vehicle
Elément de déformation absorbant l'énergie pour un véhicule

(30) Priorität: 26.04.2007 DE 102007019700
(43) Veröffentlichungstag der Anmeldung: 29.10.2008
(73) Patentinhaber: Dr. Ing. h.c. F. Porsche AG, 70435 Stuttgart (DE)
(72) Erfinder: Benkler, Olaf, 75242 Neuhausen/Schellbronn (DE); Oßwald, Markus, 71229 Leonberg-Höfingen (DE); Zierle, Matthias, 70794 Filderstadt (DE)

(56) Entgegenhaltungen:
- EP-A1- 1 600 338
- DE-A1-102004 058 249
- US-A- 5 791 716

## Beschreibung

Die Erfindung bezieht sich auf ein energieabsorbierendes Deformationselement nach dem Oberbegriff des Anspruchs 1.

Aus der DE 100 63 339 ist zum Absorbieren einer Aufprallenergie in Säulen, Trägern und dergleichen für Kraftfahrzeuge ein energieabsorbierendes Deformationselement bekannt, das in einer Aufbaustruktur zwischen einem Rohbauelement und einer Innenraumverkleidung angeordnet ist und aus einem gitterartigen Element besteht. Das Deformationselement besteht aus beabstandet zueinander angeordneten U-Profilen mit einem Steg und zwischen Schenkeln der Profile quergerichtet angeordneten Versteifungsstegen. Die Profile sind über Verbindungsstege zu einer langgestreckten, zumindest in einer Ebene angeordneten Baueinheit verbunden. Die Herstellung des Deformationselements ist wegen der verschiedenen Bestandteile aufwändig.

Aus der DE 10 2004 058 249 A1 ist ein Deformationselement gemäß Oberbegriff des Anspruchs 1 bekannt, das durch zwei voneinander beabstandete Deformationswände gebildet ist, die im Wesentlichen parallel zueinander ausgerichtet sind und die mit wenigstens einem Verbindungsteil zu einem einstückigen Bauteil verbunden sind. An einem freien Endbereich der Deformationswände ist ein Flansch angeordnet. Hierbei ist die Herstellung des Deformationselements vereinfacht. Die Gestaltung des Deformationselements bietet aber nicht immer einen optimalen Insassenschutz.

Ein weiteres Beispiel eines Deformationselementes beschreibt EP 1 600 338 A.

Aufgabe der Erfindung ist es, ein Deformationselement für ein Fahrzeug, insbesondere für ein Kraftfahrzeug, zu schaffen, das einfach herzustellen ist und einen verbesserten Insassenschutz bietet.
Diese Aufgabe wird erfindungsgemäß durch ein Deformationselement mit den Merkmalen des Anspruchs 1 gelöst. Vorteilhafte Weiterbildungen des erfindungsgemäßen Deformationselements ergeben sich aus den abhängigen Ansprüchen.

Das erfindungsgemäße Deformationselement besteht aus einem im Wesentlichen U-förmigen Profil, an dessen freien Endbereichen jeweils wenigstens bereichsweise ein Flansch angeordnet ist, wobei mehrere Ausklinkungen oder Ausnehmungen im Flansch vorgesehen sind. Diese Gestaltung ermöglicht auf einfache Weise ein Deformationselement herzustellen, das verbesserte Deformationseigenschaften besitzt und verbesserten Insassenschutz bietet.

In vorteilhafter Weiterbildung erstrecken sich die Ausklinkungen in die Wände des U-förmigen Profils bis zum Bodenteil des U-förmigen Profils. Bei dieser Gestaltung wird das Deformationselement leicht deformiert.

In einer weiteren vorteilhaften Weiterbildung liegen die Ausklinkungen in gegenüber angeordneten Flanschen einander direkt gegenüber. Hierbei werden vorteilhafte Deformationseigenschaften des Deformationselements erzielt.

In einer weiteren vorteilhaften Weiterbildung sind die Ausklinkungen in gegenüberliedenden Flanschen in Längsrichtung des U-Profils zueinander versetzt. Hierbei werden andere vorteilhafte Deformationseigenschaften des Deformationselements erzielt.

Weitere Vorteile und Ausgestaltungen der Erfindung ergeben sich aus der nachfolgenden Beschreibung und den beiliegenden Zeichnungen.

Die Erfindung ist anhand mehrerer Ausführungsbeispiele in den Zeichnungen schematisch dargestellt und wird im Folgenden unter Bezugnahme auf die Zeichnungen ausführlich beschrieben.

Figur 1 zeigt eine schematische perspektivische Darstellung eines Deformationselements gemäß einer Ausführungsform der Erfindung,
Figur 2 zeigt eine schematische perspektivische Darstellung eines Deformationselements gemäß einer weiteren Ausführungsform der Erfindung,
Figur 3 zeigt eine schematische perspektivische Darstellung eines Deformationselements gemäß einer weiteren Ausführungsform der Erfindung,
Figur 4 zeigt eine schematische perspektivische Darstellung eines Deformationselements gemäß einer weiteren Ausführungsform der Erfindung,
Figur 5 zeigt eine schematische Querschnittansicht eines erfindungsgemäßen Deformationselements im montierten Zustand auf einem Fahrzeughimmel,
Figur 6 zeigt eine Draufsicht eines Fahrzeughimmels mit mehreren erfindungsgemäßen Deformationselementen.

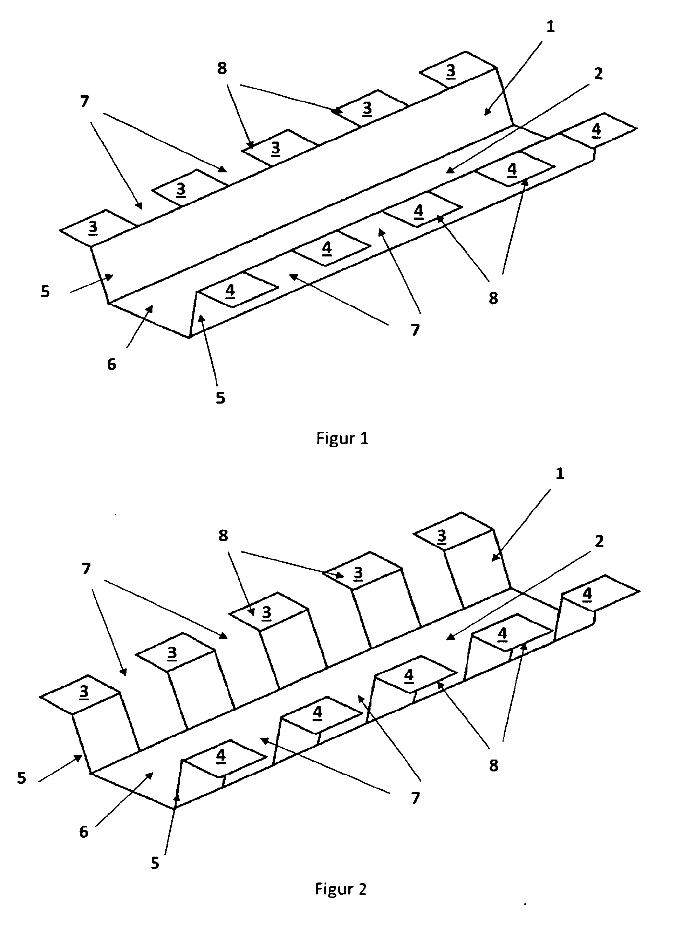

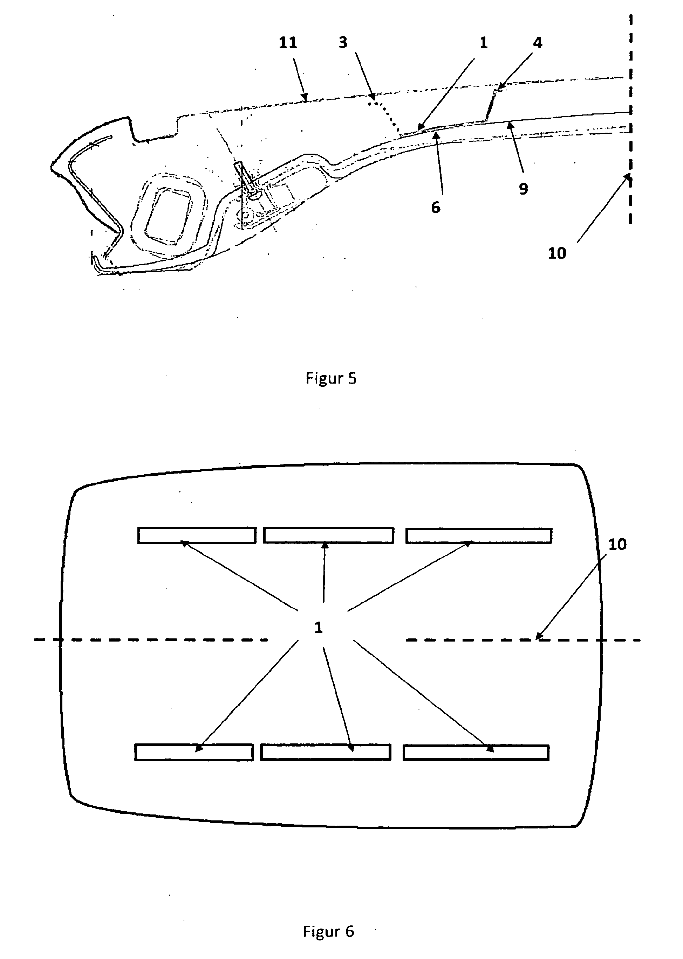

In Figur 1 ist ein energieabsorbierendes Deformationselement 1 gemäß einer Ausführungsform der Erfindung dargestellt. Das Deformationselement 1 ist im montierten Zustand in einem Anprallbereich zwischen einem Verkleidungsteil eines Fahrzeuges und einer Fahrzeugkarosserie angeordnet. Das Deformationselement 1 ist insbesondere zwischen einem Dachhimmel 9 (vgl. z.B. Figur 5) und einem Fahrzeugdach 11 (vgl. z.B. Figur 5) angeordnet. Es ist aber auch vorstellbar, das Deformationselement 1 in Fahrzeugsäulen oder dergleichen anzuordnen.

Das Deformationselement 1 besteht aus einem im Wesentlichen U-förmigen Profil 2, an dessen freien Endbereichen jeweils wenigstens bereichsweise ein Flansch 3, 4 angeordnet ist. Das im Wesentlichen U-förmige Profil 2 umfasst zwei Deformationswände 5, die im montierten Zustand im Wesentlichen parallel zueinander ausgerichtet sind und die mit wenigstens einem Bodenteil 6 zu einem einstückigen Bauteil verbunden sind. Das Deformationselement 1 ist vorzugsweise aus Blech oder einem Kunststoffmaterial gefertigt.

Die Flansche 3, 4 ragen jeweils von den freien Enden der Deformationswände 5 des U-förmigen Profils vorzugsweise seitlich hinaus. Weiterhin können die Flansche so gegenüber den Deformationswände 5 abgewinkelt sind, dass die Flansche konturbündig mit der Fahrzeugkarosserie verlaufen.

Erfindungsgemäß werden mehrere Ausnehmungen oder Ausklinkungen 7 in den Flanschen vorgesehen. Bei der Veränderung der Größe der Ausklinkungen oder der Ausnehmungen 7 können die Deformationseigenschaften auf einfache Weise angepasst werden. Vorzugsweise sind die Ausnehmungen oder Ausklinkungen 7 rechteckig ausgebildet, wie aus den Figuren ersichtlich ist. In der Ausführungsform in Figur 1 erstrecken sich die Ausklinkungen 7 bis zu den Wänden 5 des U-förmigen Profils 2. Die Zahl der Ausklinkungen 7 und der Abstand zwischen benachbarten Ausklinkungen 7 kann so ausgewählt werden, dass die erwünschten Deformationseigenschaften erzielt sind. In der vorteilhaften Ausführungsform in Figur 1 gleicht die Größe der Ausklinkungen 7 der Größe der dazwischen bleibenden Flansche oder Laschen 8. Vorzugsweise entspricht die Höhe der Deformationswände dem Abstand zwischen dem Verkleidungsteil (z.B. dem Dachhimmel) und der Fahrzeugkarosserie (z.B. dem Fahrzeugdach), so dass im montierten Zustand die Flansche 3,4 des Deformationselements dort jeweils in einer Anlageverbindung anliegen.

In Figur 2 ist ein energieabsorbierendes Deformationselement 1 gemäß einer weiteren bevorzugten Ausführungsform der Erfindung dargestellt. Gleiche Elemente werden mit gleichen Bezugszeichen versehen. In dieser Ausführungsform erstrecken sich die Ausklinkungen oder Ausnehmungen 7 in die Deformationswände 5 und vorzugweise bis zur Grundfläche oder Bodenteil 6 des U-förmigen Profils. Hierbei wird die Steifigkeit des Deformationselements 1 reduziert. Die Ausklinkungen oder Ausnehmungen 7 sind in gegenüberliedenden Flanschen 3, 4 und Deformationswände 5 vorgesehen und die Ausklinkungen oder Ausnehmungen 7 sind direkt gegenüberliegend. Die Zahl der Ausklinkungen 7 und der Abstand zwischen benachbarten Ausklinkungen 7 kann wiederum so ausgewählt werden, dass die erwünschten Deformationseigenschaften erzielt sind. In der vorteilhaften Ausführungsform in Figur 2 gleicht die Breite der Ausklinkungen 7 der Breite der dazwischen bleibenden Flansche oder Laschen 8.

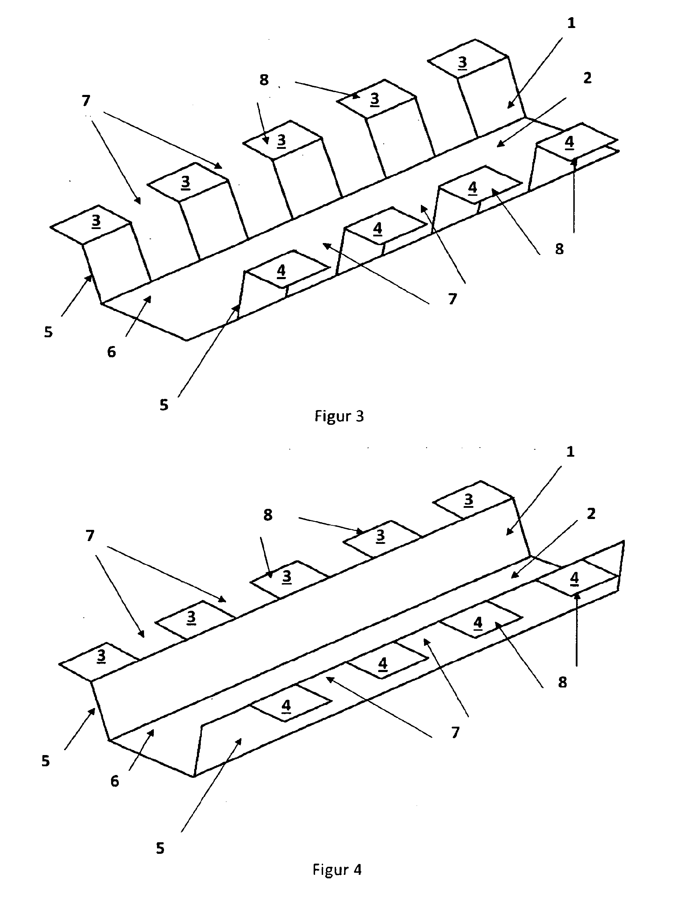

Die Figur 3 zeigt eine Weiterbildung des Deformationselements 1 in Figur 2, bei dem die Ausklinkungen oder Ausnehmungen 7 in gegenüberliedenden Flanschen 3, 4 und Deformationswände 5 in Längsrichtung des U-Profils 2 zueinander versetzt sind.

Die Figur 4 zeigt eine Weiterbildung des Deformationselements 1 in Figur 1, bei dem die Ausklinkungen oder Ausnehmungen 7 in gegenüberliedenden Flanschen 3, 4 in Längsrichtung des U-Profils 2 zueinander versetzt sind.

In den Figuren 5 wird die Anordnung des Deformationselements 1 zwischen einem Dachhimmel 9 und einem Fahrzeugdach 11 eines Fahrzeugs dargestellt. Hierbei ist ersichtlich, dass die Unterseite des Bodenteils 6 mit einer Rückseite des Dachhimmels 9 verbunden ist. Vorzugweise ist die Unterseite des Bodenteils 6 mit der Rückseite des Dachhimmels 9 verklebt. Das Profil des Bodenteils 6 kann weiterhin so ausgebildet sein, dass es konturbündig mit dem Dachhimmel 9 verläuft.

Die zwei Deformationswände 5 verlaufen zwischen dem Dachhimmel 9 und dem Fahrzeugdach 11 und vorzugsweise ragen die Flansche 3, 4 jeweils von den freien Enden der Deformationswände 5 des U-förmigen Profils 2 seitlich hinaus. Wie bereits erwähnt können die Flansche 3, 4 so gegenüber den Deformationswände 5 abgewinkelt sein, dass die Flansche konturbündig mit dem Fahrzeugdach 11 verlaufen.

Die Mittellinie des Fahrzeugs ist mit Bezugsziffer 10 in den Figuren 5 und 6 bezeichnet. Hierbei ist ersichtlich, dass das Deformationselement 1 zur Seite des Fahrzeugs angeordnet ist und die Längsrichtung des Deformationselements im montierten Zustand der Längsrichtung des Fahrzeugs entspricht, um einen verbesserten Insassenschutz zu erzielen. Mehrere Deformationselemente 1 werden in Längsrichtung des Fahrzeugs vorgesehen.

Die vorhergehende Beschreibung der Ausführungsbeispiele gemäß der vorliegenden Erfindung dient nur zu illustrativen Zwecken und nicht zum Zwecke der Beschränkung der Erfindung. Insbesondere im Hinblick auf einige bevorzugte Ausführungsbeispiele entnimmt ihr der Fachmann, dass verschiedene Änderungen und Modifikationen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

## Patentansprüche

1. Energieabsorbierendes Deformationselement für ein Fahrzeug, insbesondere für ein Kraftfahrzeug, bei dem das Deformationselement (1) im montierten Zustand in einem Anprallbereich zwischen einem Verkleidungsteil und einer Fahrzeugkarosserie, insbesondere zwischen einem Dachhimmel (9) und einem Fahrzeugdach (11) angeordnet ist, wobei das Deformationselement (1) aus einem im Wesentlichen U-förmigen Profil (2) besteht, an dessen freien Endbereichen jeweils wenigstens bereichsweise ein Flansch (3, 4) angeordnet ist, wobei das im Wesentlichen U-förmige Profil (2) aus zwei Deformationswänden (5) besteht, die im montierten Zustand im Wesentlichen parallel zueinander ausgerichtet sind und die mit wenigstens einem Bodenteil (6) zu einem einstückigen Bauteil verbunden sind, wobei die Flansche (3, 4) so gegenüber den Deformationswänden (5) abgewinkelt sind, dass die Flansche (3, 4) konturbündig mit der Fahrzeugkarosserie (11) verlaufen, **dadurch gekennzeichnet, dass** mehrere Ausklinkungen (7) in den Flanschen (3, 4) vorgesehen sind.

2. Deformationselement nach Anspruch 1, **dadurch gekennzeichnet, dass** die Flansche (3, 4) jeweils von den Wänden des U-förmigen Profils (2) seitlich hinausragen.

3. Deformationselement nach einem der vorhergehenden Ansprüche, **dadurch gekennzeichnet, dass** sich die Ausklinkungen (7) bis zu den Deformationswänden (5) des U-förmigen Profils (2) erstrecken oder bis in die Deformationswände (5) des U-förmigen Profils (2) hinein erstrecken oder bis zum Bodenteil (6) des U-förmigen Profils (2) erstrecken.

4. Deformationselement nach einem der vorhergehenden Ansprüche, **dadurch gekennzeichnet, dass** die Ausklinkungen (7) bei gegenüberliegenden Flanschen (3, 4) direkt gegenüberliegend angeordnet sind oder bei gegenüberliegenden Flanschen (3, 4) in Längsrichtung des U-förmigen Profils (2) zueinander versetzt angeordnet sind.

5. Deformationselement nach einem der vorhergehenden Ansprüche, **dadurch gekennzeichnet,**
- **dass** der Bodenteil (6) des U-förmigen Profils (2) im montierten Zustand mit einer Rückseite eines Dachhimmels (9) verbunden ist, und/oder
- **dass** die Längsrichtung des Deformationselements (1) im montierten Zustand der Längsrichtung des Fahrzeugs entspricht, und/oder
- **dass** das Deformationselement (1) im montierten Zustand im Seitenbereich des Fahrzeugdachs (11) angeordnet ist.

6. Deformationselement nach einem der vorhergehenden Ansprüche, **dadurch gekennzeichnet, dass** das Deformationselement (1) aus Blech oder aus einem Kunststoffmaterial gefertigt ist.

7. Deformationselement nach einem der vorhergehenden Ansprüche, **dadurch gekennzeichnet, dass** die Wände des U-förmigen Profils (2) als Deformationswände (5) ausgebildet sind, wobei die Höhe der Deformationswände (5) dem Abstand zwischen dem Verkleidungsteil (9) und der Fahrzeugkarosserie (11) entspricht, so dass diese im montierten Zustand des Deformationselements (1) dort jeweils in einer Anlageverbindung anliegen.

8. Fahrzeugdachanordnung mit mehreren energieabsorbierenden Deformationselementen (1) nach einem der vorhergehenden Ansprüche.

## Claims

1. Energy-absorbing deformation element for a vehicle, in particular for a motor vehicle, in which, in the fitted state, the deformation element (1) is arranged in an impact region between a lining part and a vehicle body, in particular between a roof lining (9) and a vehicle roof (11), wherein the deformation element (1) consists of a substantially U-shaped profile (2), at the free end regions of which a flange (3, 4) is in each case arranged at least in regions, wherein the substantially U-shaped profile (2) consists of two deformation walls (5) which, in the fitted state, are oriented substantially parallel to each other and which are connected to at least one base part (6) to form a single-piece component, wherein the flanges (3, 4) are angled in relation to the deformation walls (5) in such a manner that the flanges (3, 4) are flush with the contour of the vehicle body (11), **characterized in that** a plurality of notches (7) are provided in the flanges (3, 4).

2. Deformation element according to Claim 1, **characterized in that** the flanges (3, 4) each protrude laterally from the walls of the U-shaped profile (2).

3. Deformation element according to either of the preceding claims, **characterized in that** the notches (7) extend as far as the deformation walls (5) of the U-shaped profile (2) or into the deformation walls (5) of the U-shaped profile (2) or extend as far as the base part (6) of the U-shaped profile (2).

4. Deformation element according to one of the preceding claims, **characterized in that**, when the flanges (3, 4) lie opposite each other, the notches (7) are arranged directly opposite one another or, when the flanges (3, 4) are opposite each other, the notches are arranged offset with respect to one another in the longitudinal direction of the U-shaped profile (2).

5. Deformation element according to one of the preceding claims, **characterized**
- **in that**, in the fitted state, the base part (6) of the U-shaped profile (2) is connected to a rear side of a roof lining (9), and/or
- **in that**, in the fitted state, the longitudinal direction of the deformation element (1) corresponds to the longitudinal direction of the vehicle, and/or
- **in that**, in the fitted state, the deformation element (1) is arranged in the side region of the vehicle roof (11).

6. Deformation element according to one of the preceding claims, **characterized in that** the deformation element (1) is manufactured from sheet metal or from a plastics material.

7. Deformation element according to one of the preceding claims, **characterized in that** the walls of the U-shaped profile (2) are designed as deformation walls (5), wherein the height of the deformation walls (5) corresponds to the distance between the lining part (9) and the vehicle body (11) such that, in the fitted state of the deformation element (1), said deformation walls bear there in each case in a bearing connection.

8. Vehicle roof arrangement with a plurality of energy-absorbing deformation elements (1) according to one of the preceding claims.

## Revendications

1. Elément de déformation absorbant l'énergie pour un véhicule, en particulier pour un véhicule automobile, dans lequel l'élément de déformation (1) est disposé dans l'état monté dans une région de collision entre une partie d'habillage verticale et une carrosserie du véhicule, notamment entre un habillage du plafond (9) et un toit du véhicule (11), l'élément de déformation (1) se composant d'un profilé (2) essentiellement en forme de U au niveau des régions d'extrémités libres duquel est à chaque fois disposée au moins en partie une bride (3, 4), le profilé (2) essentiellement en forme de U se composant de deux parois de déformation (5), qui, dans l'état monté, sont orientées essentiellement parallèlement l'une à l'autre, et qui sont reliées par au moins une partie de fond (6) pour former un composant d'une seule pièce, les brides (3, 4) étant coudées par rapport aux parois de déformation (5) de telle sorte que les brides (3, 4) s'étendent en affleurement par leur contour avec la carrosserie du véhicule (11), **caractérisé en ce que** plusieurs crantages (7) sont prévus dans les brides (3, 4).

2. Elément de déformation selon la revendication 1, **caractérisé en ce que** les brides (3, 4) font saillie latéralement à chaque fois depuis les parois du profilé (2) en forme de U.

3. Elément de déformation selon l'une quelconque des revendications précédentes, **caractérisé en ce que** les crantages (7) s'étendent jusqu'aux parois de déformation (5) du profilé (2) en forme de U ou jusqu'à l'intérieur des parois de déformation (5) du profilé (2) en forme de U ou jusqu'à la partie de fond (6) du profilé (2) en forme de U.

4. Elément de déformation selon l'une quelconque des revendications précédentes, **caractérisé en ce que** les crantages (7) sont disposés directement en face les uns des autres dans le cas de brides en regard (3, 4), ou sont disposés de manière décalée les uns des autres dans la direction longitudinale du profilé (2) en forme de U dans le cas de brides en regard (3, 4).

5. Elément de déformation selon l'une quelconque des revendications précédentes, **caractérisé en ce que**
- la partie de fond (6) du profilé (2) en forme de U est reliée dans l'état monté à un côté arrière d'un habillage du plafond (9) et/ou
- la direction longitudinale de l'élément de déformation (1) dans l'état monté correspond à la direction longitudinale du véhicule et/ou
- l'élément de déformation (1) est disposé dans l'état monté dans la région latérale du toit du véhicule (11).

6. Elément de déformation selon l'une quelconque des revendications précédentes, **caractérisé en ce que** l'élément de déformation (1) est fabriqué en tôle ou en un matériau en plastique.

7. Elément de déformation selon l'une quelconque des revendications précédentes, **caractérisé en ce que** les parois du profilé (2) en forme de U sont réalisées sous forme de parois de déformation (5), la hauteur des parois de déformation (5) correspondant à la distance entre la partie d'habillage (9) et la carrosserie du véhicule (11), de sorte que celles-ci dans l'état monté de l'élément de déformation (1) s'appliquent à cet endroit à chaque fois dans une connexion d'appui.

8. Agencement de toit de véhicule comprenant plusieurs éléments de déformation (1) absorbant l'énergie selon l'une quelconque des revendications précédentes.
